(19) Europäisches Patentamt
European Patent Office
Office européen des brevets

(11) Veröffentlichungsnummer : **0 108 712**
**B1**

(12) **EUROPÄISCHE PATENTSCHRIFT**

(45) Veröffentlichungstag der Patentschrift : **05.03.86**

(51) Int. Cl.[4] : **C 08 G 59/40**, C 08 K 5/21

(21) Anmeldenummer : **83810458.6**

(22) Anmeldetag : **06.10.83**

(54) **Heisshärtbare Epoxidharzmischungen.**

(30) Priorität : **12.10.82 GB 8229073**
**12.10.82 GB 8229074**

(43) Veröffentlichungstag der Anmeldung : **16.05.84 Patentblatt 84/20**

(45) Bekanntmachung des Hinweises auf die Patenterteilung : **05.03.86 Patentblatt 86/10**

(84) Benannte Vertragsstaaten :
**AT BE CH DE FR GB IT LI NL SE**

(56) Entgegenhaltungen :
**EP-A- 0 039 230**
**EP-A- 0 075 533**
**DE-A- 3 015 033**
**GB-A- 999 862**
**US-A- 3 562 215**
**Patent Abstracts of Japan Band 7, Nr. 7, 12. Januar 1983**

(73) Patentinhaber : **CIBA-GEIGY AG**
**Klybeckstrasse 141**
**CH-4002 Basel (CH)**

(72) Erfinder : **Andrews, Christopher Michael**
**12 Hope Street**
**Cambridge CB1 3NA (GB)**

**EP 0 108 712 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft heisshärtbare Epoxidharzmischungen und die durch Härtung der erfindungsgemässen Mischungen erhaltenen Produkte.

Es ist bekannt, dass Epoxidharze, d. h. im Durchschnitt mehr als eine 1,2-Epoxidgruppe pro Molekül enthaltende Substanzen, durch Reaktion mit verschiedenen Substanzklassen unter Bildung vernetzter, unschmelzbarer, unlöslicher Produkte mit wertvollen technischen Eigenschaften gehärtet werden können.

Aus dem US-Patent 3 386 956 ist die Härtung von Epoxidharzen mittels Harnstoffen der folgenden Formeln

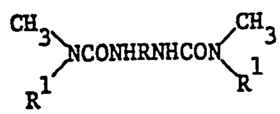

(I)

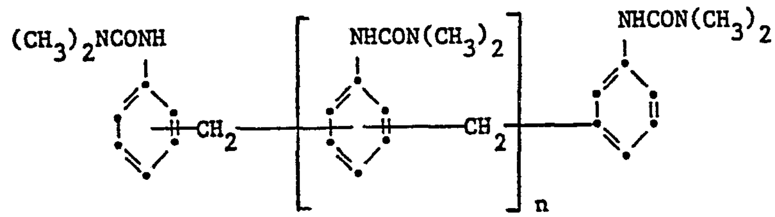

(II)

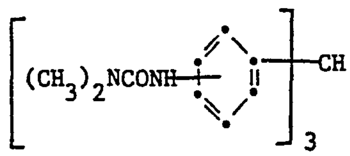

(III)

und

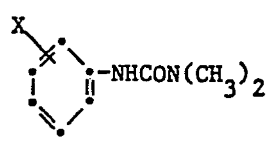

(IV)

bekannt geworden, worin R für einen unter methylsubstituiertem Phenylen, Methylendiphenylen, Dimethoxidiphenylen und Dimethyldiphenylen ausgewählten zweiwertigen Rest, $R^1$ für Methyl oder Hydroxyäthyl, n für eine ganze Zahl von 2 bis 5 und X für $-OCH_3$, $-Cl$, $-H$, $-CH_3$ oder $-NO_2$ stehen.

Ferner offenbart das US-Patent, dass die Härtungswirkung dieser Mittel durch Einarbeitung von Dicyandiamid, Stearinsäurehydrazid, Adipinsäuredihydrazid, Succinimid oder Canacetamid in die härtbaren Massen gefördert werden kann.

Gemäss jenem Patent überwindet die Verwendung der besagten Harnstoffe eine bei härtbaren Epoxidharzmassen des Standes der Technik auftretende Schwierigkeit, nämlich dass bei Verwendung von Härtern wie Dicyandiamid verhältnismässig hohe Temperaturen und ziemlich lange Härtungzeiten erforderlich sind, während bei Verwendung anderer, reaktionsfähigerer Härter oder Beschleuniger d. h. diese sind nicht ausreichend latent.

Aus dem US-Patent 3 660 316 ist bekannt, dass 1-Cyan-3-niederalkylguanidine ebenfalls die Härtung von Epoxidharzen mit Bisharnstoffen der Formel II bis IV fördern.

Harnstoffe der obigen Formeln, insbesondere N-(4-Chlorphenyl)-N',N'-dimethylharnstoff und 2,4-Bis-(N,N-dimethylureido)-toluol, wurden industriell zur Härtung von Epoxidharzen eingesetzt, für sich allein oder mit Dicyandiamid als Aktivator sowie als Aktivatoren für die Härtung von Epoxidharzen mit Dicyandiamid.

Wegen der immer schärfer werdenden Anforderungen an die Lagerfähigkeit von härtbaren Mischungen bei Raumtemperatur bei dennoch rascher Härtung bei mässig erhöhten Temperaturen (z. B. 100 °C) besteht jedoch nun ein Bedarf für Ersatzprodukte für die oben erwähnten Harnstoffe.

Es wurde nun gefunden, dass gewisse phenolische Harstoffe diese schärferen Erfordernisse weitgehend erfüllen.

Gegenstand dieser Erfindung sind demnach heisshärtbare Mischungen, die

(a) ein Epoxidharz und

(b) eine wirksame Menge eines Harnstoffes der Formel V

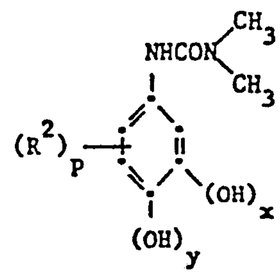

(V)

enthalten, worin

$R_2$ für $-NH_2$, $-NO_2$, —Cl, —Br, oder Alkyl mit 1 to 10 C-Atomen steht, p null, 1 oder 2 bedeutet, x und y je null oder 1 bedeutet und die Summe von x und y 1 ist.

Gegenstand der Erfindung sind auch die durch heisshärtung der erfindungsgemässen Mischungen erhaltenen Produkte.

Vorzugsweise bedeutet in der Formel V p null, oder 1, wobei $R^2$ dann für $-NO_2$, —Cl oder $-CH_3$ steht, oder 2, wobei dann $R^2$ für —Cl steht.

Besonders hervorzugte Verbindungen der Formel V sind N-(3-Hydroxyphenyl)-N',N'-dimethylharnstoff, N-(4,6-Dichlor-3-hydroxyphenyl)-N,N'-dimethylharnstoff, N-(4-Hydroxyphenyl-N,N'-dimethylharnstoff, N-(4-Hydroxy-2-methylphenyl)-N,N'-dimethylharnstoff, N-(4-Hydroxy-3-nitrophenyl)-N,N'-dimethylharnstoff und N-(3,5-Dichloro-4-hydroxyphenyl)-N',N'-dimethylharnstoff.

Die Mischungen können eine heisshärtende Menge (b) enthalten, d. h. einen Harnstoff der Formel V als einzigen Härter. Dabei wird man üblicherweise 3 bis 25, vorzugsweise 5 bis 20, Gewichtsteile (b) auf 100 Gewichtsteile Epoxidharz (a) einsetzen.

Die Hydroxyphenylharnstoffe der Formel V sind im allgemeinen bekannt oder können nach bekannten Verfahren hergestellt werden. Ein geeignetes Herstellungsverfahren wird im GB-Patent 999 862 beschrieben, worin m- oder p-Hydroxyphenylharnstoffe der Formel V als Zwischenprodukte zur Herstellung der entsprechenden Propargyläther, welche Herbizide sind, eingesetzt werden. So wird ein Aminophenol der Formel VI

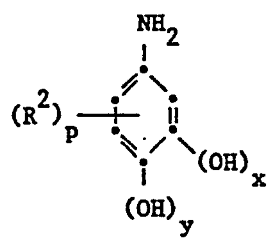

(VI)

mit einem Dimethylcarbamoylhalogen der Formel VII behandelt

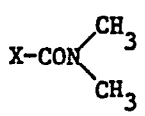

(VII)

worin $R^2$, p, x, und y die gleiche Bedeutung wie in Forme V haben und X ein Halogenatom, vorzugsweise Chloratom, darstellt. Diese Umsetzung wird gewöhnlich in einem organischen Lösungsmittel, bei Rautemperatur oder erhöhter Temperatur und in Gegenwart oder Abwesenheit einer organischen oder anorganischen Base durchgeführt.

Ein anderes geeignetes Verfahren besteht in der umsetzung von Aminophenol der Formel VI mit Phosgen in einem aprotischen, hochpolaren Lösungsmittel, wobei das erhaltene Isocyanatophenol anschliessend mit Dimethylamin behandelt wird, um den gewünschten Phenolharnstoff zu erhalten (siehe US-Patent 3 488 376, worin diese Verbindungen als Zwischenprodukte verwendet werden, und H. Ulrich et al., Synthesis, 1979 No. *4*, Seite 277-279).

Die Hydroxyphenylharnstoffe der Formel V, worin p 1 oder 2 ist, können aus den anderen Verbindungen nach bekannten Verfahren hergestellt werden. Zum Beispiel kann aus einer Verbindung der Formel V, worin p für null steht, durch Nitrierung oder Halogenierung eine Verbindung erhalten werden, worin p 1 oder 2 ist und $R^2$ eine Nitrogruppe oder halogenatom bedeutet. Verbindungen der Formel V, worin $R^2$ eine Nitrogruppe bedeutet, kann durch Reduzierung in die entsprechende Aminoverbindung umgewandelt werden.

Es wurde ferner gefunden, dass Dicyandiamid, Melamin, Carbonsäurehydrazide sowie gewisse weitere Verbindungen die Heisshärtung von Epoxidharzen mit Harnstoffen der Formel V fördern.

Ein weiterer Gegenstand sind demnach erfindungsgemässe heisshärtbare Mischungen, die zusätslich

(c) eine relativ geringe Gewichtsmenge, bezogen auf das Gewicht von (b), eines unter Dicyandiamid, Carbonsäurehydraziden, Succinimid, Cyanacetamid, 1-Cyan-3-niederalkylguanidinen mit bis zu 3 Kohlenstoffatomen in der bzw. den Niederalkylgruppe(n), Imidazolen und Carbonsäuresalzen tertiärer Amine ausgewählten Heisshärtungsbeschleunigers enthalten, wobei (b) mit (c) zusammen eine heisshärtende Menge für (a) ausmachen und typischerweise sich zusammen auf 5 bis 25 Gewichsteile pro 100 Gewichtsteile Epoxidharz (a) belaufen.

Es wurde ferner gefunden, dass Harnstoffe der Formel V die Heisshärtung von Epoxidharzen mit Dicyandiamid, Melamin, Carbonsäurehydraziden und gewissen anderen Verbindungen beschleunigen.

Ein weiterer Gegenstand sind demnach erfindungsgemässe heisshärtbare Mischungen, die zusätzlich (d) eine relativ grosse Menge, bezogen auf das Gewicht von (b), eines unter Dicyandiamid, Melamin, Carbonsäurehydraziden, Succinimid, Cyanacetamid, 1-Cyan-3-niederalkylguanidinen mit bis zu 3 Kohlenstoffatomen in der bzw. den Niederalkylgruppe(n), Imidazolen und Carbonsäuresalzen tertiärer Amine ausgewählten Heisshärters für Epoxidharze enthalten, wobei (d) mit (b) zusammen eine heisshärtende Menge für (a) ausmachen und typischerweise sich zusammen auf 5 bis 25 Gewichtsteile pro 100 Gewichtsteile Epoxidharz (a) belaufen.

In diesen Mischungen einsetzbare Epoxidharze sind vorzugsweise solche mit mindestens zwei direkt an ein Sauerstoff-, Stickstoff- oder Schwefelatom bzw. -atome gebundenen Gruppen der Formel VIII

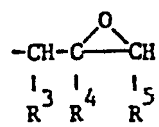

(VIII)

worin entweder $R^3$ und $R^5$ je ein Wasserstoffatom darstellen, wobei $R^4$ dann ein Wasserstoffatom oder eine Methylgruppe bedeutet, oder $R^3$ und $R^5$ zusammen $-CH_2CH_2-$ darstellen, wobei $R^4$ dann ein Wasserstoffatom bedeutet.

Als Beispiele solcher Harze seien Polyglycidyl- und Poly-(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z. B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure sowie von aromatischen Polycarbonsäuren wie Phthalsäure, Isophthalsäure und Terephthalsäure ableiten.

Weitere Beispiele sind Polyglycidyl- und Poly-(β-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich aus acyclischen Alkoholen wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit und Polyepichlorhydrinen, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-3-cyclohexen, und aus Alkoholen mit aromatischen Kernen wie N,N-Bis-(2-hydroxyäthyl)-anilin und p,p'-Bis-(2-hydroxyäthylamino)-diphenylmethan herstellen. Man kann sie ferner aus einkernigen Phenolen, wie Resorcin und Hydrochinon, und mehrkernigen Phenolen wie Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan und 2,2-Bis-(3,5-dibrom-4-hydroxyphenyl)-propan sowie aus Aldehyden wie Formaldehyd, Acetaldehyd, Chloral und Furfurol mit Phenolen wie Phenol selbst und durch Chloratome oder Alkylgruppen mit jeweils bis zu 9 Kohlenstoffatomen ringsubstituiertem Phenol wie 4-Chlorphenol, 2-Methylphenol und 4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan, m-Xylylendiamin und Bis-(4)methylaminophenyl)-methan erhalten werden, Triglycidylisocyanurat sowie N,N'-Diglycidylderivate von cyclischen Alkylenharnstoffen wie Aethylenharnstoff und 1,3-Propylenharnstoff, und Hydantoinen wie 5,5-Dimethylhydantoin.

Poly-(S-glycidyl)-verbindungen sind zum Beispiel die Di-S-glycidyl-derivate von Dithiolen wie Aethan-1,2-dithiol und Bis-(4-mercaptomethylphenyl)-äther.

Beispiele für Epoxidharze mit Gruppen der Formel VIII, worin $R^5$ und $R^7$ zusammen eine $-CH_2CH_2$-Gruppe bedeuten, sind Bis-(2,3)epoxycyclopentyl)-äther, 2,3-Epoxycyclopentyl-glycidyläther und 1,2-Bis-(2,3-epoxycyclopentyloxy)-äthan.

In Betracht kommen auch Epoxidharze, in welchen die 1,2-Epoxidgruppen an Heteroatome verschiedener Art gebunden sind, beispielsweise das N,N,O-Triglycicylderivat des 4-Aminophenols, der

Glycidyläther/Glycidylester der Salicylsäure, N-Glycidyl-N'-(2-glycidyloxypropyl)-5,5-dimethylhydantoin und 2-Glycidyloxy-1,3-bis-(5,5-dimethyl-1-glycidylhydantoin-3-yl)-propan.

Gewünschtenfalls kann ein Gemisch aus Epoxidharzen verwendet werden.

Bevorzugte Epoxidharze sind Polyglycidyläther, Polyglycidylester, N,N'-Diglycidylhydantoine und Poly-(N-glycidyl)-derivate aromatischer Amine. Speziell bevorzugte Harze sind die Polyglycidyläther von 2,2-Bis-(4-hydroxyphenyl)-propan, Bis-(4-hydroxyphenyl)-methan oder einem aus Formaldehyd und Phenol oder durch ein Chloratom oder eine Alkylkohlenwasserstoffgruppe mit 1 bis 9 Kohlenstoffatomen ringsubstituiertem Phenol gebildeten Novolak mit einem 1,2-Epoxidgehalt von mindestens 0,5 Aequivalent pro Kilogramm, Bis-(4-(diglycidylamino)-phenyl)-methan und p-(Diglycidylamino)-phenyl-glycidyläther.

Stellt der Beschleuniger (c) oder der Haupthärter (d) ein Carbonsäurehydrazid dar, so ist dies vorzugsweise Stearinsäurehydrazid, Oxalsäuredihydrazid, Adipinsäuredihydrazid, Sebacinsäuredihydrazid oder Isophthalsäuredihydrazid.

Bei Verwendung eines 1-Cyan-3-niederalkylguanidins als Beschleuniger (c) oder Haupthärter (d) handelt es sich vorzugsweise um die 3-Methyl-, 3,3-Dimethyl- oder 3,3-Diäthylverbindung.

Mit einem Imidazol als Beschleuniger (c) oder Haupthärter (d) kommen vorzugsweise 2-Phenylimidazol, N-Methylimidazol oder 2-Aethyl-4-methylimidazol in Betracht.

Liegt als Beschleuniger (c) oder Haupthärter (d) ein Carbonsäuresalz eines tertiären Amins vor, so ist dies vorzugsweise das Salz einer Hydroxycarbonsäure, wie Milchsäure oder Salicylsäure, mit einer Mannichbase wie 2,4,6-Tris-(dimethylaminomethyl)-phenol.

Ueblicherweise wird der Beschleuniger (c) in einem Anteil von 10 bis 50 Gewichtsteilen auf 100 Gewichtsteile des Harnstoffs (b) bzw. der Harnstoff (b) bei Verwendung als Beschleuniger für den Härter (d) in einem Anteil von 25 bis 75 Gewichtsteilen auf 100 Gewichtsteile (d) vorliegen.

Die neuen Mischungen können ferner geeignete Weichmacher wie Dibutylphthalat und Dioctylphthalat, inerte Verdünnungsmittel wie Teere und Bitumen sowie sogenannte reaktionsfähige Verdünnungsmittel, insbesondere Monoepoxide wie n-Butylglycidyläther, Isooctylglycidyläther, Phenylgycidyläther, Kresylglycidyläther, Glycidylester tertiärer aliphatischer Monocarbonsäuregemische, Glycidylacrylat und Glycidylmethacrylat enthalten. Ferner können darin Zusatzstoffe wie Füllstoffe, Verstärkungsstoffe, polymere Schlagfestmacher wie Polyäthersulfone, Phenoxyharze und Butadien/Acrylnitrilkautschuk, Farbmittel, Verlaufmittel, Flammhemmstoffe und Entformungsmittel vorliegen. Beispiele für geeignete Streckmittel, Füllstoffe und Verstärkungsstoffe sind Glasfasern, Kohlenstoffasern, aromatische Polyamidfasern, Glaskügelchen, Glimmer, Quarzmehl, Calciumcarbonat, Cellulose, Kaolin, Wollastonit, kolloidale Kieselsäure grosser spezifischer Oberfläche gepulvertes Polyvinylchlorid sowie gepulvertes Polyolefinkohlenwasserstoffe wie Polyäthylen und Polypropylen.

Die erfindungsgemässen härtbaren Mischungen lassen sich als Laminier-, Tränk- und Giessharze, Pulverbeschichtungen, Formmassen, Kitte und Dichtungsmassen, Einbettungs- und Isoliermassen für die Elektrotechnik, aber insbesondere als Klebstoffe und Grundierung für Klebstoffe verwenden.

Die erfindungsgemässen Mischungen werden vorzugsweise dadurch gehärtet, dass man sie auf eine Temperatur im Bereich 100 °C bis 180 °C, insbesondere 100° bis 130°, erhitzt. Ueblicherweise genügen 30 bis 120 Minuten Erhitzen zur Aushärtung.

Die nachfolgenden Beispiele erläutern die Erfindung. Teile sind dabei Gewichtsteile.

Die in diesen Beispielen verwendeten Harnstoffe werden wie folgt hergestellt:

N-(3-Hydroxyphenyl)-N',N'-dimethylharnstoff

10 g m-Aminophenol und 7,42 g N,N-Dimethylcarbamoylchlorid werden in 65 ml Tetrahydrofuran gelöst, und die Lösung wird während 4 Stunden bei 30 °C gerührt. Das Lösungsmittel wird unter vermindertem Druck abgedampft und der feste Rückstand in Wasser suspendiert. Die Mischung wird filtriert, gut mit Wasser gewaschen und ine einem Exsikkator getrocknet. Es wird N-(3-Hydroxyphenyl)-N',N'-dimethylharnstoff mit einem Schmelzpount von 198 °C (Zersetzung), gemessen auf der Koflerbank, erhalten (im US-Patent 3 488 376 wird ein Schmelzpunkt von 194-197 °C angegeben).

N-(4,6-Dichlor-3-hydroxyphenyl)-N',N'-dimethylharnstoff

4,5 g N-(3-Hydroxyphenyl)-N',N'-dimethylharnstoff wird in 100 ml Eisessig bei 55 °C gelöst, und die Lösung wird auf 30 °C abgekühlt. 1,77 g Chlorgas werden in die Lösung eingeleitet, und nach Beendigung wird die Lösung unter Rühren eine Stunde auf 30 °C gehalten. Dann wird diese im Vakuum bei 80 °C konzentriert bis Kristalle beginnen sich abzuscheiden. Die Mischung wird auf 10 °C abgekühlt und filtriert. Der Rückstand wird gründlich mit Wasser gewaschen. Der Rückstand wird aus Isopropanol umkristallisiert, wobei 1,55 g N-(4,6-Dichlor-3-hydroxyphenyl)-N',N'-dimethylharnstoff mit einem Schmelzpunkt von 208 °C (Zersetzung) erhalten werden.

N-(4-Hydroxyphenyl)-N',N'-dimethylharnstoff

Gemäss GB-Patent 999 982 werden 30 g p-Aminophenol, 30 g Dimethylcarbamoylchlorid, 28 g

Natriumhydrogencarbonat in 600 ml trockenem Aceton zugegeben und unter Rühren und Rückfluss während 3 Stunden erhitzt. Diese Lösung wird heiss filtriert und das Filtrat über Nacht abkühlen gelassen. Die entstehenden Kristalle werden abfiltriert und getrocknet. Die erhaltene Harnstoffverbindung weist einen Schmelzpunkt von 205 °C auf, gemessen auf der Koflerbank (im GB-Patent werden 205°-206 °C als Schmelzpunt für diese Verbindung angegeben).

N-(4)Hydroxy-2-methylphenyl)-N',N-dimethylharnstoff

Diese Verbindung wird analog der obigen Arbeitsweise hergestellt, indem man das p-Aminophenol durch eine äquimolare Menge an 4-Aminophenol durch eine äquimolare Menge an 4-Amino-3-methylphenol ersetzt. Die erhaltene Verbindung weist einen Schmelzpunkt von 245 °C (Zersetzung) auf.

N-(3,5-Dichlor-4-hydroxyphenyl)-N',N'-dimethylharnstoff

Diese Verbindung wird ebenfalls analog der obigen Arbeitsweise hergestellt, indem man das p-Aminophenol durch eine äquimolare Menge an 4-Amino-2,6-dichlorphenol ersetzt. Die erhaltene Verbindung weist einen Schmelzpunkt von 196 °C (Zersetzung) auf.

N-(4-Hydroxy-3-nitrophenyl)-N',N'-dimethylharnstoff

15,5 g 4-Hydroxy-3-nitrophenylisocyanate, hergestellt wie von H. Ulrich et al., loc. cit. beschrieben aus 4-Amino-2-nitrophenol und Phosgen, werden zu 100 g einer 29 Gwichts-%igen Lösung von Dimethylamin in Toluol zugegeben, und die Mischung wird bei Raumtemperatur während zwei Stunden gerührt. Nach Verdampfen unter vermindertem Druck erhält man einen Rückstand, der durch Umkristallisieren aus Wasser N-(4-Hydroxy-3-nitrophenyl)-N',N'-dimethylharnstoff mit einem Schmelzpunkt von 142 °C ergibt.

« Epoxidharz I » ist ein Polyglycidyläther des 2,2-Bis-(4-hydroxyphenyl)-propans mit einem 1,2-Epoxidgehalt von 5,16 Aequivalenten/kg und einer Viskosität von 24,5 Pa.s bei 21 °C.

« Epoxidharz II » ist Bis-(4-(diglycidylamino)-phenyl)-methan mit einem 1,2-Epoxidgehalt von 7,8-8,2 Aequivalenten/kg.

Die Gelierzeiten werden dadurch bestimmt, indem man ungefähr 0,1 g des Gemisches auf einen auf die angegebene Temperatur erhitzten Metallblock aufbringt und die zur Gelierung erforderliche Zeit bestimmt.

## Beispiel 1

Eine Mischung aus 100 Teilen Epoxidharz I, 13 Teilen N-(3-Hydroxyphenyl)-N',N'-dimethylharnstoff und 5 Teilen eines im Handel erhältlichen, Asbest enthaltenden Thixotropiemittels wird auf einem Dreiwalzenstuhl hergestellt. Die Gelierzeit der Mischung beträgt 22,5 Minuten bei 120 °C und 30 Tage bei 40 °C.

## Beispiel 2

Beispiel 1 wird unter Verwendung von 15,5 Teilen N-(4,6-Dichloro-3-hydroxyphenyl)-N',N'-dimethylharnstoff anstelle der oben eingesetzten Harnstoffverbindung wiederholt. Die Gelierzeit der Mischung beträgt 30,5 Minuten bei 120 °C und über 30 Tage bei 40 °C.

## Beispeil 3

Dieses Beispiel zeigt die Verwendung von Dicyandiamid als Beschleuniger bei der heisshärtung eines Epoxidharzes mit einem Harnstoff der Formel V.

Eine Mischung aus 100 Teilen Epoxidharz I, 10 Teilen N-(3-Hydroxyphenyl)-N',N'-dimethylharnstoff, 2 Teilen Dicyandiamid und 5 Teilen eines im Handel erhältlichen, Asbest enthaltenden Thixotropiemittels hat bei 120 °C eine Gelierzeit von 18,75 Minuten. Im Vergleich dazu wird in Beispiel 1 noch eine grössere Menge (13 Teile) der Harnstoffverbindung eingesetzt.

## Beispiel 4

Dieses Beispiel zeigt die Verwendung eines Harnstoffes der Formel V für die Beschleunigung der Heisshärtung eines Epoxidharzes mit Dicyandiamid.

Die folgenden Mischungen werden hergestellt, wobei die Zahlen Gewichtsteile angeben :

(Siehe Tabelle Seite 7 f.)

| | a | b |
|---|---|---|
| Epoxidharz I | 100 | 100 |
| Dicyandiamid | 7 | 7 |
| Thioxotropi emittel | 6 | 6 |
| N-(3-Hydroxyphenyl)-N',N'-dimethylharnstoff | 4 | 0 |

(Das Thixotropiemittel besteht aus 5 Teilen feinteiligen Siliciumdioxid und 1 Teil Glycerin).

Proben der Mischungen werden auf 120 °C erhitzt. « a » geliert in 24 Minuten, doch « b » ist nach 150 Minuten noch nicht geliert.

Beispiel 5

Eine Mischung aus 100 Teilen Epoxidharz I, 13 Teilen N-(4-Hydroxyphenyl)-N',N'-dimethylharnstoff und 5 Teilen eines im Handel erhältlichen, Asbest enthaltenden Thixotropiemittels wird auf einem Dreiwalzenstuhl herstellt. Die Mischung geliert bei 120 °C in 27 Minuten und bei 40 °C in 28 Tagen.

Beispiel 6

Beispiel 5 wird unter Verwendung von 14 Teilen N-(4-Hydroxy-2-methylphenyl)-N',N'-dimethylharnstoff anstelle der anderen Harnstoffverbindung wiederholt. Die Mischung geliert bei 120 °C in 25 Minuten und bei 40 °C in 24 Tagen.

Beispiel 7

Beispeil 5 wird unter Verwendung von 18 Teilen N-(3,5-Dichlor-4-hydroxyphenyl)-N',N'-dimethylharnstoff anstelle der anderen Harnstoffverbindung wiederholt. Die Mischung geliert bei 120 °C in 32,5 Minuten und bei 40 °C in 30 Tagen.

Beispiel 8

Dieses Beispiel zeigt die Verwendung von Dicyandiamid als Beschleuniger bei der Heisshärtung eines Epoxidharzes mit einem Harnstoff der Formel V.

Beispiel 5 wird mit der Massgabe wiederholt, dass zusätzlich 2 Teile Dicyandiamid zur Mischung zugegeben werden. Dabei vermindert sich die Gelierzeit bei 120 °C von 27 auf 16 Minuten.

Beispiel 9

Dieses Beispiel zeigt die Verwendung eines Harnstoffes der Formel V als Beschleuniger bei der Heisshärtung eines Epoxidharzes mit Dicyandiamid.

Die folgenden Mischungen werden hergestellt, wobei die Zahlen Gewichtsteile angeben :

| | a | b |
|---|---|---|
| Epoxidharz | 100 | 100 |
| Dicyandiamid | 7 | 7 |
| Thixotropiemittel | 6 | 6 |
| N-(4-Hydroxyphenyl)-N',N'-dimethylharnstoff | 4 | 0 |

(Das Thixotropiemittel besteht aus 5 Teilen feinteiligem siliciumdioxid und 1 Teil Glycerin).

Proben der Mischungen werden auf 120 °C erhitzt. « a » geliert in 21 Minuten, doch « b » ist nach 150 Minuten noch nicht geliert.

Beispiel 10

Beispiel 5 wird unter Verwendung von 16,2 Teilen N-(4-Hydroxy-3-nitrophenyl)-N',N'-dimethylharnstoff anstelle des dort verwendeten Harnstoffes wiederholt. Die Mischung geliert bei 120 °C in 33 Minuten und bei 40 °C in 18 Tagen.

Beispiel 11

Es werden Mischungen aus Epoxidharz II und N-(4-hydroxyphenyl)-N',N'-dimethylharnstoff

hergestellt, wobei (i) 2,5 Teile, (ii) 5 Teile und (iii) 100 Teile der Harnstoffverbindungen auf 100 Teile des Epoxidharzes enthält. Die Gelierzeit der Mischungen bei verschiedenen Temperaturen beträgt wie folgt :

| Temperatur | Gelierzeit (i) | (ii) | (iii) |
|---|---|---|---|
| 150°C | 6 1/2 min. | 3 1/2 min. | 2 1/2 min. |
| 130°C | 14 min. | 9 min. | 7 1/2 min. |
| 110°C | 46 min. | 27 min. | 22 min. |
| 100°C | 70 min. | 55 min. | 45 min. |
| 90°C | 180 min. | 96 min. | 88 min. |
| 40°C | > 18 Tage | 15 Tage | 10 Tage |

## Beispiel 12

In diesem Beispiel werden Mischungen bei der Bildung von Klebverbindungen heissgehärtet.

Mischungen aus 100 Teilen Epoxidharz I, 25 Teilen Aluminiumpulver (passierend 200 mesh, Britisch Standard 410) 5 Teilen eines im Handel erhältlichen, Asbest enthaltenden Thixotropiemittels und 13 Teilen entweder N-(3-Hydroxyphenyl)-N',N'-dimethylharnstoff oder N-(4-Hydroxyphenyl)-N',N'-dimethylharnstoff werden mittels eines Dreiwalzenstuhls bereitet und zur Herstellung von 2,54 cm × 1,27 cm grossen, einfach überlappten Klebfugen verwendet, wobei entfettete und gebeizte Aluminiumlegierungsbleche, erhältlich im Handel unter der Bezeichnung « 2L 73 Alclad », eingesetzt werden. Die Verklebung wird durch Erhitzen auf 120 °C in einer Stunde gehärtet. Scherfestigkeit des Verbundes beträgt 28.4 MPa, wenn die Mischung die 3-Hydroxyharnstoffverbindung enthält, oder 29.2 MPa, wenn die Mischung die 4-Hydroxyharnstoffverbindung enthält.

## Beispiel 13

Dieses Beispiel zeigt die durch ein Hydrazid bewirkte Beschleunigung bei der Härtung eines Epoxidharzes mittels eines Harnstoffes der Formel V.

Die folgenden Mischungen werden im Dreiwalzenstuhl hergestellt, wobei die Zahlen Teile bedeuten. Es ist ersichtlich, dass die Einarbeitung von Adipinsäuredihydrazid in einer Abnahme der Gelierzeit ohne Beeinträchtigung der Lagerfähigkeit führt.

| | a | b |
|---|---|---|
| Epoxidharz I | 100 | 100 |
| N-(4-Hydroxyphenyl)-N',N'-dimethylharnstoff | 10 | 10 |
| Thixotropiemittel *) | 2 | 2 |
| Adipinsäuredihydrazid | 4 | 0 |
| Gelierzeit bei 120°C | 13 min. | 21,5 min. |
| 100°C | 70 min. | 80 min. |
| Lagerfähigkeit bei 40°C | > 18 Tage | > 18 Tage |

*) ein handelsübliches Produkt auf Asbestgundlage

## Beispiel 14

Dieses Beispiel erläutert die durch ein Harnstoff der formel V bewirkte Beschleunigung bei der Härtung eines Epoxidharzes mittels Adipinsäuredihydrazid.

Die folgenden Mischungen werden im Dreiwalzenstuhl hergestellt, wobei die Zahlen Teile bedeuten :

(Siehe Tabelle Seite 9 f.)

| | a | b |
|---|---|---|
| Epoxidharz I | 100 | 100 |
| Adipinsäuredihydrazid | 22,5 | 22,5 |
| Thixotropiemittel*) | 2 | 2 |
| N-(4-Hydroxyphenyl)-N',N'-dimethylharnstoff | 5,6 | 0 |
| Gelierzeit bei 120°C | 11 min. | 180 min. |
| 100°C | 65 min. | 390 min. |
| Lagerfähigkeit bei 40°C | 18 Tage | 18 Tage |

*) ein handelsübliches Produkt auf Asbestgrundlage.

Beispiel 15

In diesem Beispiel wird die Glasumwandlungstemperatur eines mit einem Harnstoff der Formel V gehärteten Epoxidharzes mittels « differential scanning calorimetry » bestimmt.

Mischungen werden hergestellt aus 100 Teilen Epoxidharz I, 5 Teilen des Thixotropiemittels auf Asbestgrundlage und 13 Teilen entweder N-(4-Hydroxyphenyl)-N',N'-dimethylharnstoff oder N-(3-Hydroxyphenyl)-N',N'-dimethylharnstoff. Proben von beiden Mischungen werden während 1 Stunde bei 120 °C gehärtet und beide zeigen eine Glasumwandlungstemperatur von 105 °C.

**Patentansprüche**

1. Heisshärtbare Mischungen, dadurch gekennzeichnet, dass sie
(a) ein Epoxidharz und
(b) eine wirksame Menge eines Harnstoffes der Formel V

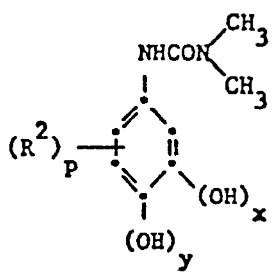

(V)

enthalten, worin
$R^2$ für $-NH_2$, $-NO_2$, $-Cl$, $-Br$, oder Alkyl mit 1 bis 10 C-Atomen steht,
p null, 1 oder 2 bedeutet,
x und y je null oder 1 bedeutet und die Summe von x und y 1 ist.

2. Mischungen gemäss Anspruch 1, dadurch gekennzeichnet, dass in der Formel V p null ist, oder 1 bedeutet, wobei $R^2$ dann für $-NO_2$, $-Cl$ oder $-CH_3$ steht, oder 2 bedeutet, wobei $R^2$ dann jeweils eine Methylgruppe bedeutet.

3. Mischungen gemäss Anspruch 1, dadurch gekennzeichnet, dass (b) ein N-(3-Hydroxyphenyl)-N',N'-dimethylharnstoff, N-(4,6-Dichlor-3-hydroxyphenyl)-N',N'-dimethylharnstoff, N-(4-Hydroxyphenyl)-N',N'-dimethylharnstoff, N-(4-Hydroxy-2-methylphenyl)-N',N'-dimethylharnstoff, N-(4-Hydroxy-3-nitrophenyl)-N',N'-dimethylharnstoff oder N-(3,5-Dichlor-4-hydroxyphenyl)-N',N'-dimethylharnstoff darstellt.

4. Mischungen nach einem der vorhergehenden Ansprüche, dadurch gekennzeichnet, dass (b) in einer heisshärtenden Menge vorliegt.

5. Mischungen gemäss Anspruch 4, dadurch gekennzeichnet, dass sie 3 bis 25 Gewichtsteile (b) pro 100 Gewichtsteile (a) enthalten.

6. Mischungen gemäss Anspruch 1 bis 3, dadurch gekennzeichnet, dass sie ferner (c) eine geringe Gewichtsmenge, bezogen auf die Gewichtsmenge (b), eines unter Dicyandiamid, Carbonsäurehydraziden, Succinimid, Cyanacetamid, 1-Cyan-3-niederalkylguanidinen mit bis zu 3 Kohlenstoffatomen in der bzw. den Niederalkylgruppe(n), Imidazolen und Carbonsäuresalzen tertiärer Amine ausgewählten Heisshärtungsbeschleunigers enthalten.

7. Mischungen gemäss Anspruch 1 bis 3, dadurch gekennzeichnet, dass sie ferner (d) eine grosse

Gewichtsmenge, bezogen auf die Gewichtsmenge (b), eines unter Dicyandiamid, Carbonsäurehydraziden, Succinimid, Cyanacetamid, 1-Cyan-3-niederalkylguanidinen mit bis zu 3 Kohlenstoffatomen in der bzw. den Niederalkylgruppe(n), Imidazolen und Carbonsäuresalzen tertiärer Amine ausgewählten Heisshärters enthalten.

8. Mischungen nach einem der vorhergehenden Ansprüche, dadurch gekennzeichnet, dass

(a) wenigstens zwei Gruppen der Formel VIII

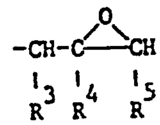

(VIII)

enthält, welche direkt in ein Sauerstoff-, Stickstoff- oder Schwefelatom bzw. -atome gebunden sind, worin $R^3$ und $R^5$ je ein Wasserstoffatom, wobei $R^4$ dann ein Wasserstoffatom oder eine Methylgruppe bedeutet, oder $R^3$ und $R^5$ zusammen den Rest $—CH_2—CH_2—$ darstellen, wobei $R^6$ dann ein Wasserstoffatom bedeutet.

9. Mischungen gemäss Anspruch 8, dadurch gekennzeichnet, dass

a) ein Polyglycidyläther, ein Polyglycidylester, ein N,N'-Diglycidylhydantoin oder ein poly-(N-glycidyl)-derivat eines aromatischen Amins ist.

10. Die durch Heisshärtung der Mischungen gemäss Anspruch 1 erhaltenen Produkte.

**Claims**

1. A heat-curable composition containing

(a) an epoxide resin and

(b) an effective amount of a urea of formula V

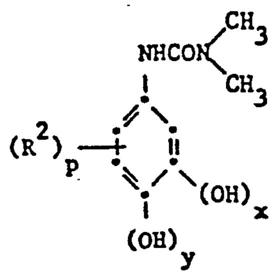

(V)

wherein

$R^2$ is $—NH_2$, $—NO_2$, —Cl, —Br, or alkyl of 1 to 10 carbon atoms,

p is zero, 1 or 2,

x and y are each zero or 1 and the sum of x and y is 1.

2. A composition according to claim 1, wherein p in formula V is zero, or is 1, in which case $R^2$ is $—NO_2$, —Cl or $—CH_3$, or p is 2, in which case each of the substituents $R_2$ is a methyl group.

3. A composition according to claim 1, wherein (b) is an N-(3-hydroxyphenyl)-N,N'-dimethylurea, N-(4,6-dichloro-3-hydroxyphenyl)-N',N'-dimethylurea, N-(4-hydroxyphenyl)-N',N'-dimethylurea, N-(4-hydroxy-2-methylphenyl)-N',N'-dimethylurea, N-(4-hydroxy-3-nitrophenyl)-N',N'-dimethylurea or N-(3,5-dichloro-4-hydroxyphenyl)-N',N'-dimethylurea.

4. A composition according to any one of the preceding claims, containing a heat-curing amount of (b).

5. A composition according to claim 4, containing from 3 to 25 parts by weight of (b) per 100 parts by weight of (a).

6. A composition according to any one of claims 1 to 3, which further contains (c) a minor amount by weight, based on the weight of (b), of an accelerator for the heat-curing, selected from dicyandiamide, carboxylic acid hydrazides, succinimide, cyanoacetamide, 1-cyano-3-(lower alkyl) guanidines wherein the lower alkyl group or groups contain up to 3 carbon atoms, imidazoles, and salts of carboxylic acids with tertiary amines.

7. A composition according to any one of claims 1 to 3, which further contains (d) a major amount by weight, based on the weight of (b), of a heat-curing agent selected from dicyandiamide, carboxylic acid hydrazides, succinimide, cyanoacetamide, 1-cyano-3-(lower alkyl) guanidines wherein the lower alkyl group or groups contain up to 3 carbon atoms, imidazoles, and salts of carboxylic acids with tertiary amines.

8. A composition according to any one of the preceding claims, wherein

(a) contains at least two groups of formula VIII

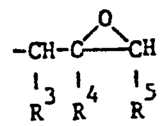

(VIII)

which are directly attached to an atom or atoms of oxygen, nitrogen or sulphur, wherein each of $R^3$ and $R^5$ is a hydrogen atom, in which case $R^4$ is a hydrogen atom or a methyl group, or $R^3$ and $R^5$ together are $—CH_2CH_2—$, in which case $R^4$ is a hydrogen atom.

9. A composition according to claim 8, wherein

(a) is a polyglycidyl ether, a polyglycidyl ester, an N,N'-diglycidylhydantoin, or a poly(N-glycidyl) derivative of an aromatic amine.

10. A product obtained by heat-curing a composition according to claim 1.

**Revendications**

1. Mélanges thermodurcissables caractérisés en ce qu'ils contiennent :

(a) une résine époxydique et

(b) une quantité efficace d'une urée répondant à la formule V :

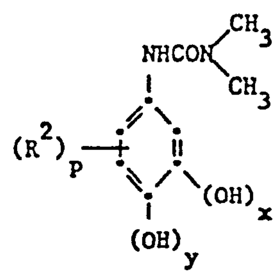

(V)

dans laquelle

$R_2$ représente $—NH_2$, $—NO_2$, —Cl, —Br ou un alkyle contenant de 1 à 10 atomes de carbone,

p désigne un nombre égal à 0, à 1 ou à 2 et

x et y représentent chacun le nombre 0 ou le nombre 1 avec la condition que la somme (x + y) soit égale à 1.

2. Mélanges selon la revendication 1 caractérisés en ce que, dans la formule V, l'indice p désigne le nombre 0, ou désigne le nombre 1 et dans ce cas $R^2$ représente $—NO_2$, —Cl ou $—CH_3$, ou désigne le nombre 2 et dans ce cas chacun des symboles $R^2$ représente un radical méthyle.

3. Mélanges selon la revendication 1 caractérisés en ce que le composé (b) est la N-(hydroxy-3 phényl)-N',N'-diméthyl-urée, la N-(hydroxy-3 dichloro-4,6 phényl)-N',N'-diméthyl-urée, la N-(hydroxy-4 phényl)-N',N'-diméthyl-urée, la N-(méthyl-2 hydroxy-4 phényl)-N'-N'-diméthyl-urée, la N-(nitro-3 hydroxy-4 phényl)-N',N'-diméthyl-urée ou la N-(dichloro-3,5 hydroxy-4 phényl)-N',N'-diméthyl-urée.

4. Mélanges selon l'une quelconque des revendications précédentes, caractérisés en ce que le composé (b) se trouve en une quantité capable de provoquer un durcissement à chaud.

5. Mélanges selon la revendication 4 caractérisés en ce qu'ils contiennent de 3 à 25 parties en poids de (b) pour 100 parties en poids de (a).

6. Mélanges selon l'une quelconque des revendications 1 à 3, caractérisés en ce qu'ils contiennent en outre (c) un faible poids, par rapport au poids de (b), d'un accélérateur de thermodurcissement choisi dans l'ensemble constitué par la cyanoguanidine, les hydrazides d'acides carboxyliques, le succinimide, le cyanacétamide, les cyano-1 alkyl-3 guanidines dont l'alkyle ou chacun des alkyles contient de 1 à 3 atomes de carbone, les imidazoles et les sels formés par des acides carboxyliques avec des amines tertiaires.

7. Mélanges selon l'une quelconque des revendications 1 à 3, caractérisés en ce qu'ils contiennent en outre (d) une grande quantité pondérale, par rapport au poids de (b), d'un thermodurcisseur choisi dans l'ensemble constitué par la cyanoguanidine, les hydrazides d'acides carboxyliques, le succinimide, le cyanacétamide, les cyano-1 alkyl-3 guanidines dont l'alkyle ou chacun des alkyles contient de 1 à 3 atomes de carbone, les imidazoles et les sels formés par les acides carboxyliques et les amines tertiaires.

8. Mélanges selon l'une quelconque des revendications précédentes, caractérisés en ce que le composé

(a) contient au moins deux radicaux répondant à la formule VIII :

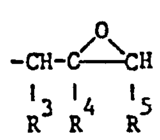

(VIII)

dans laquelle $R^3$ et $R^5$ représentent chacun un atome d'hydrogène, $R^4$ représentant alors un atome d'hydrogène ou un radical méthyle, ou $R^3$ et $R^5$ forment ensemble un radical $-CH_2-CH_2-$, et dans ce cas $R^4$ représente un atome d'hydrogène, qui sont liés directement à un atome ou des atomes d'oxygène, d'azote ou de soufre.

9. Mélanges selon la revendication 8, caractérisés en ce que le composé

(a) est un éther polyglycidylique, un ester polyglycidylique, une N,N'-diglycidyl-hydantoïne ou un dérivé poly-(N-glycidylique) d'une amine aromatique.

10. Produits qui ont été obtenus par durcissement à chaud des mélanges selon la revendication 1.